# EUROPEAN PATENT APPLICATION

(11) **EP 3 269 947 A1**
(43) Date of publication of application: **17.01.2018**
(21) Application number: 17181509.5
(22) Date of filing: 14.07.2017
(51) Int. Cl.: F01D 25/24, F23R 3/60

(54) **AXIAL COMBUSTOR RETENTION SYSTEM**

(30) Priority: 14.07.2016 US 201615210090
(71) Applicant: United Technologies Corporation, Farmington, CT 06032 (US)
(72) Inventor: CLARK, Thomas E., Sanford, ME Maine 04073 (US); LEE, Harvey C., Newington, CT Connecticut 06111 (US); McLAUGHLIN, Brian C., Kennebunk, ME Maine 04043 (US); LEMOINE, Jonathan, Vernon, CT Connecticut 06066 (US)
(74) Representative: Hull, James Edward

(57) **Abstract**

A combustor assembly for a gas turbine engine (20) comprises a vane support ring (80); an annular combustor (56)extending around a central axis (A) and being located radially inwards of the vane support ring (80), the annular combustor (56) including an aft end, a forward end with at least one opening through which at least one fuel nozzle (70) is received, and an annular outer shell (60) and an annular inner shell (62) that define an annular combustion chamber (64) therebetween, the annular outer shell (60) including a radially-outwardly extending flange (60a) including at least one scallop cut (82); and a stop member (76) integrally formed with the vane support ring (80).

## Description

### BACKGROUND

The present disclosure is directed to a combustor anti-surge retention system. Specifically, an integral anti-surge lug on a vane support is utilized to provide anti-surge retention to combustor hardware in place of bolted joints.

Combustors, such as those used in gas turbine engines, typically include radially spaced inner and outer liners that define an annular combustion chamber in between. A bulkhead panel is provided at a forward end of the chamber to shield a forward section of the combustor from the relatively high temperatures in the chamber. A plurality of fuel nozzles extend into the combustor through the forward end and into the bulkhead panel to provide fuel to the combustor.

Combustor anti-surge retention systems are responsible for axially retaining combustor hardware during a surge event and are typically installed to the 1st stage vane support and outer diffuser case.

The radial design space associated with legacy anti-surge retention systems are significantly large and often require the use of a bolted configuration. The bolted legacy configurations use a combination of bolts, clinch nuts, and associated structural bosses to provide the means to assemble anti-surge tabs or blocks forward of a combustor catch-rail. During a surge event, the combustor deflects forward into the anti-surge tab and/or block and the mechanical load is transmitted through the bolts into the vane support, and out through the cases.

### SUMMARY

In accordance with a first aspect of the present disclosure, there is provided a combustor assembly for a gas turbine engine, comprising: a vane support ring; an annular combustor extending around a central axis and being located radially inwards of the vane support ring, the annular combustor including an aft end, a forward end with at least one opening through which at least one fuel nozzle is received, and an annular outer shell and an annular inner shell that define an annular combustion chamber there between, the annular outer shell including a radially-outwardly extending flange including at least one scallop cut; and a stop member integrally formed with the vane support ring.

In another and/or alternative embodiment, the radially-outwardly extending flange is located at the aft end.

In another and/or alternative embodiment, the radially-outwardly extending flange is annular.

In another and/or alternative embodiment, the at least one scallop cut and the stop member integrally formed with the vane support ring are configured for direct axial installation of the vane support ring over the combustor annular outer shell.

In another and/or alternative embodiment, the scallop cut in the radially-outwardly extending flange is sized to allow the stop member to pass through the radially-outwardly extending flange.

In another and/or alternative embodiment, the scallop cut in the radially-outwardly extending flange and the stop member are configured to assemble in a clocking bayonet style alignment.

In another and/or alternative embodiment, stop member includes a ring structure, a tab extending radially inwardly from the ring structure and a circumferential flange extending opposite the tab, the circumferential flange being integral to the vane support ring.

In another and/or alternative embodiment, the stop member is axially-forwardly spaced apart by a distance D from the radially-outwardly extending flange such that axial-forward movement of the annular combustor, with respect to directionality defined by the forward end and the aft end, is limited to an amount equal to the distance D.

In accordance with another aspect of the present disclosure, there is provided a gas turbine engine comprising: a static structure; a compressor section; an annular combustor in fluid communication with the compressor section, the annular combustor extending around a central axis and being located radially inwards of the static structure, the annular combustor including an aft end, a forward end through which at least one fuel nozzle is received, and an annular outer shell and an annular inner shell that define an annular combustion chamber there between, the annular combustor being free of any rigid attachments directly between the static structure and the annular outer shell, the annular outer shell including a radially-outwardly extending flange having at least one scallop cut; a turbine section in fluid communication with the annular combustor; and at least one stop member integral with a vane support ring on the static structure and adjacent the radially-outwardly extending flange such that axial-forward movement of the annular combustor is limited, with respect to directionality defined by the forward end and the aft end.

In another and/or alternative embodiment, the stop member is axially-forwardly spaced apart by a distance D from the radially-outwardly extending flange such that movement of the annular combustor is limited to an amount equal to the distance D.

In another and/or alternative embodiment, the radially-outwardly extending flange is located at the aft end.

In another and/or alternative embodiment, the scallop cut is configured to allow the stop member to pass over the radially-outwardly extending flange.

In another and/or alternative embodiment, a quantity of the stop members are determined depending on the weight of the annular combustor and loads generated during operation.

In another and/or alternative embodiment, the at least one stop member is uniformly circumferentially integrated around the vane support ring.

In another and/or alternative embodiment, the scallop cut is configured such that the at least one stop member can pass over the radially-outwardly extending flange and then upon rotation of the at least one stop member relative to the radially-outwardly extending flange, the at least one stop member is configured in alignment to interfere with the radially-outwardly extending flange responsive to a surge event.

Other details of the combustor anti-surge retention system are set forth in the following detailed description and the accompanying drawing wherein like reference numerals depict like elements.

### BRIEF DESCRIPTION OF THE DRAWINGS

FIG. 1 illustrates an exemplary gas turbine engine.
FIG. 2 illustrates a cross-section of an annular combustor.
FIG 3 illustrates a cross-section of an exemplary anti-surge retention system.
FIG 4 illustrates a front view of a portion of an exemplary anti-surge retention system.
FIG 5 illustrates a perspective view of an exemplary alternative anti-surge retention system.
FIG. 6 illustrates a cross-section of the exemplary alternative anti-surge retention system of FIG. 6.

### DETAILED DESCRIPTION

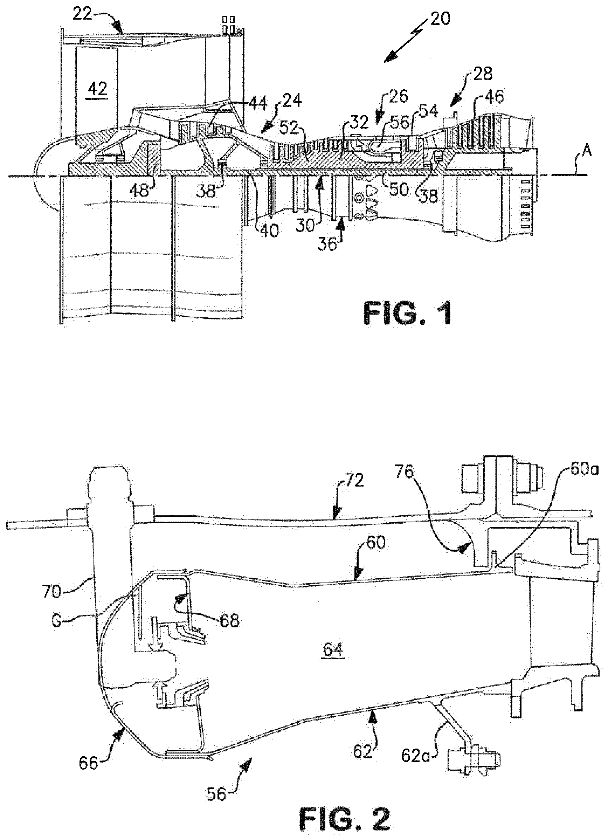

FIG. 1 illustrates an example gas turbine engine 20. The gas turbine engine 20 is disclosed herein as a high bypass, two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path while the compressor section 24 receives air along a core flow path for compression and presentation into the combustor section 26 then expansion through the turbine section 28. Although depicted as a turbofan gas turbine engine in the disclosed non-limiting embodiment, it should be understood that the concepts described herein are not limited to use with turbofans and the teachings may be applied to other types of turbine engines, including three-spool architectures and ground-based turbines that do not include the fan section 22.

The gas turbine engine 20 generally includes a low spool 30 and a high spool 32 mounted for rotation about an engine central longitudinal axis A relative to an engine static structure 36 via several bearing systems 38. It should be understood that various bearing systems 38 at various locations may alternatively or additionally be provided.

The low spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low spool 30. The high spool 32 includes an outer shaft 50 that interconnects a high pressure compressor 52 and high pressure turbine 54. It is to be understood that "low pressure" and "high pressure" as used herein are relative terms indicating that the high pressure is greater than the low pressure. An annular combustor 56 is arranged between the high pressure compressor 52 and the high pressure turbine 54. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the annular combustor 56, then expanded over the high pressure turbine 54 and low pressure turbine 46. The turbines 46 and 54 rotationally drive the respective low spool 30 and high spool 32 in response to the expansion.

FIG. 2 shows a cross-section of the annular combustor 56. The annular inner shell 62 includes a plurality of outer burner liner radially-inwardly extending flanges 62a (one shown) that rigidly affix the annular combustor 56 within the gas turbine engine 20. A plurality of fuel nozzles 70 (one shown) extend from an outer static structure 72 through corresponding openings (not shown) in the annular hood 66 that is located at the forward end of the annular combustor 56. It is to be understood that relative positional terms, such as "forward," "aft," "upper," "lower," "above," "below," and the like are relative to the normal operational attitude of the gas turbine engine 20 and should not be considered otherwise limiting.

The annular outer shell 60 free of any rigid attachments directly between the static structure 72 and the annular outer shell 60. In this regard, the annular combustor 56 is "free floating" within the gas turbine engine 20 such that the flanges 62a provide the exclusive rigid support. The term "rigid" and variations thereof as used herein refer to a support that resists deformation under the weight of the annular combustor 56 and under the loads generated in operation of the gas turbine engine 20. Rigid supports, such as the flanges 62a, thus support the weight of the annular combustor 56 under the loads generated in operation, while a flexible or non-rigid support could not bear the weight of the annular combustor 56 under such loads.

Certain events in the operation of the gas turbine engine 20 can cause the annular combustor 56 to move axially forward. As an example, a surge event in the gas turbine engine 20 can cause a back pressure that tends to urge the annular combustor 56 forward in a pivot motion about the flanges 62a. At least a component of the pivot motion is in an axially forward direction. If the axially -forward component of the motion is substantial, the outer shell 60 and bulkhead 68 may be subject to plastic deformation. A plurality of integral vane support anti-surge lugs, or simply, stop members 76 are therefore used in combination with a radially-outwardly extending flange 60a of the annular outer shell 60 to limit axial-forward motion of the annular combustor 56. Because the stop members 76 are used to limit movement, the annular combustor 56 does not need to be made more structurally robust, such as with thicker walls, to resist movement.

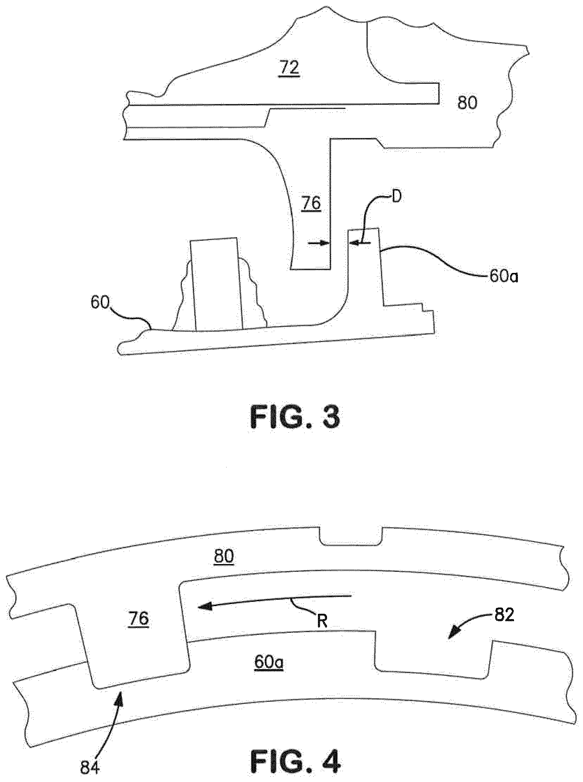

FIG. 3 shows an expanded cross-section of the stop member 76 and the radially-outwardly extending flange 60a. The radially-outwardly extending flange 60a extends completely around the annular outer shell 60. The stop member 76 is integral with the static structure 72 and is axially-forwardly spaced apart by a distance D, such as 0.010-0.050 inches (0.254-1.27 millimeters) from the radially-outwardly extending flange 60a. Thus, the stop member 76 limits the axial-forward movement of the annular combustor 56 by an amount that is equal to the distance D. The annular outer shell 60 of the annular combustor 56 is still free-floating in that it is not rigidly affixed to any other structure, but the stop member 76 limits movement in excess of the distance D to thereby ensure that the sides of the openings do not contact the fuel nozzles 70.

As an example, the distance D between the radially-outwardly extending flange 60a and the stop member 76 is selected such that the distance D is less than a gap distance, represented as distance G in FIG. 2, between the fuel nozzle 70 and corresponding sides of the adjacent opening. Thus, the annular combustor 56 is permitted to move, but only by an amount that produces stresses below the material yield strengths.

Referring also to FIG. 4, the stop member 76 in this example is an integral piece of the vane support ring 80 of the static structure 72 in the gas turbine engine 20. In one example, six stop members 76 are uniformly circumferentially integrated around the vane support ring 80, although the number of stop members 76 will vary depending on the weight of the annular combustor 56 and loads generated during operation. Because the stop members 76 are integral to the vane support ring 80, the annular combustor 56 can be assembled to the vane support ring 80 by use of scallop cuts 82 formed in the combustor outer burner liner flange 60a. The outer burner liner flange 60a includes cuts in the profile of the flange shaped as scallop cuts 82. The scallop cuts 82 are shaped to allow the stop member to pass over the flange 60a unobstructed. The stop members 76 can pass over the flange 60a and then upon clocking (arrow R), i.e., rotating the burner liner flange 60a, the stop members 76 can be aligned to interfere with the flange 60a in the event of a surge. Thus, the stop members 76 do not hinder assembly of the annular combustor 56 to the vane support ring 80.

The clearance scallop cuts 82 on the adjacent combustor outer burner liner flange 60a allows direct axial assembly of the integral vane support anti-surge lug stop members 76. A bayonet assembly method allows direct axial installation of vane support ring 80 over the combustor annular outer shell 60, with a final circumferential clocking into position. Anti-surge contact locations 84 are then placed at a location circumferentially away from the outer burner liner flange scallop cuts 82. The flange scallop cuts 82 can be spaced equally or unequally along the circumference of the flange 60a. The flange scallop cuts 82 can reduce weight.

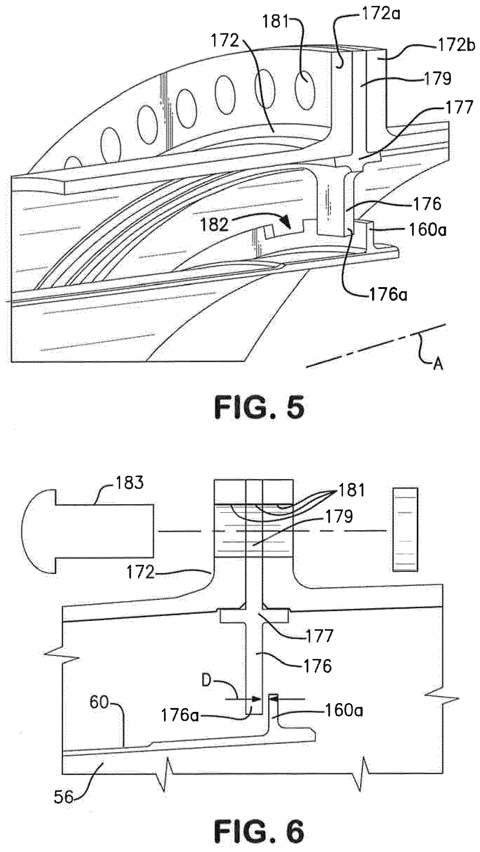

In an alternative exemplary embodiment, FIG. 5 illustrates a perspective, cutaway view of another stop member 176, and FIG. 6 illustrates a cross-section of the stop member 176. In this example, the stop member 176 includes tabs 176a (one shown) that extends radially inwardly from the outer static structure 172 such that there is a distance D between the forward side of the flange 160a and the aft side of the tab 176a. Thus, the stop member 176 limits axial-forward movement of the annular combustor 56, as described above.

The stop member 176 includes a vane support structure 177 from which the tabs 176a extend. The vane support structure 177 extends around the engine central axis A and includes a circumferential flange 179 that extends radially in a direction opposite of the tabs 176a. The circumferential flange 179 is secured between a first flange 172a and a second flange 172*b* of the outer static structure 172. The circumferential flange 179, first flange 172a and second flange 172*b* include openings 181 that align to receive a fastener 183 (FIG. 6), such as a bolt, there through to secure the circumferential flange 179 between the first flange 172a and the second flange 172*b*.

The clearance slots, i.e. scallop cuts 182 in the flange 160a, are designed to allow for ease of insertion of the tabs 176 past the flange 160a. The cuts 182 allow for direct axial assembly of the anti-surge hardware. A similar clocking bayonet style positioning can be utilized to align the tabs 176 into place.

The disclosed design utilizes existing combustor outer burner liner as a surge-retention feature.

The disclosed design places anti-surge tabs integrally onto the vane support, thus simplifying assembly and reducing part count.

The disclosed design has a minimal structural impact while introducing a new retention system.

The bolted legacy designs are limited in design space due to required gapping for clinch nut flaring tools, bolt shank size, and associated boss min wall thicknesses. Reduced radial required design space allows for advanced vane support concepts to reduce heat transfer into life-limited outer cases.

The disclosed anti-surge design could alternatively be used in any application where aft axial assembly for forward-loadbearing tabs is required by the means of clearance scallops on adjacent hardware.

An advantage of the disclosure is that it reduces anti-surge component counts, cost, and weight. Significant radial vane support design space is gained by eliminating the legacy anti-surge bolted joint configuration. Integral anti-surge lugs on the vane support transmit surge load directly to the cases without the use of a bolted joint.

There has been provided a combustor anti-surge retention system. While the combustor anti-surge retention system has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A combustor assembly for a gas turbine engine (20), comprising:
a vane support ring (80);
an annular combustor (56) extending around a central axis (A) and being located radially inwards of the vane support ring (80), the annular combustor (56) including an aft end, a forward end with at least one opening through which at least one fuel nozzle (70) is received, and an annular outer shell (60) and an annular inner shell (62) that define an annular combustion chamber (64) therebetween, the annular outer shell (60) including a radially-outwardly extending flange (60a;160a) including at least one scallop cut (82;182); and
a stop member (76;176) integrally formed with the vane support ring (80).

2. The combustor assembly according to claim 1,
wherein the radially-outwardly extending flange (60a;160a) is located at the aft end of the annular combustor (56).

3. The combustor assembly according to claim 1 or 2,
wherein the radially-outwardly extending flange (60a;160a) is annular.

4. The combustor assembly according to any preceding claim, wherein said at least one scallop cut (82;182) and said stop member (76;176) are configured for direct axial installation of the vane support ring (80) over the combustor annular outer shell (60).

5. The combustor assembly according to any preceding claim, wherein the scallop cut (82;182) is sized to allow said stop member (76;176) to pass through said radially-outwardly extending flange (60a;160a).

6. The combustor assembly according to any preceding claim, wherein the scallop cut (82;182) and the stop member (76;176) are configured to assemble in a clocking bayonet style alignment.

7. The combustor assembly according to any preceding claim, wherein the stop member (176) includes a ring structure (80), a tab (176a) extending radially inwardly from the ring structure (80) and a circumferential flange (179) extending opposite the tab (176a), the circumferential flange (179) being integral to the vane support ring (80).

8. The combustor assembly according to any preceding claim, wherein said stop member (76;176) is axially-forwardly spaced apart by a distance D from the radially-outwardly extending flange (60a;160a) such that axial-forward movement of the annular combustor (56), with respect to directionality defined by the forward end and the aft end of the annular combustor (56), is limited to an amount equal to the distance D.

9. A gas turbine engine (20) comprising:
a static structure (36);
a compressor section (24);
an annular combustor (56) in fluid communication with the compressor section (24), the annular combustor (56) extending around a central axis (A) and being located radially inwards of the static structure (36), the annular combustor (56) including an aft end, a forward end through which at least one fuel nozzle (70) is received, and an annular outer shell (60) and an annular inner shell (62) that define an annular combustion chamber (64) therebetween, the annular combustor (56) being free of any rigid attachments directly between the static structure (36) and the annular outer shell (60), the annular outer shell (60) including a radially-outwardly extending flange (60a;160a) having at least one scallop cut (82;182);
a turbine section (28) in fluid communication with the annular combustor (56); and
at least one stop member (76;176) integral with a vane support ring (80) on the static structure (36) and adjacent the radially-outwardly extending flange (60a;160a) such that axial-forward movement of the annular combustor (56) is limited, with respect to directionality defined by the forward end and the aft end of the annular combustor (56).

10. The gas turbine engine (20) according to claim 9, wherein the stop member (76;176) is axially-forwardly spaced apart by a distance D from the radially-outwardly extending flange (60a;160a) such that movement of the annular combustor (56) is limited to an amount equal to the distance D.

11. The gas turbine engine (20) according to claim 9 or 10, wherein the radially-outwardly extending flange (60a;160a) is located at the aft end of the annular combustor (56).

12. The gas turbine engine (20) according to claim 9, 10 or 11, wherein said scallop cut (82;182) is configured to allow said stop member (76;176) to pass over said radially-outwardly extending flange (60a;160a).

13. The gas turbine engine (20) according to any of claims 9 to 12, wherein a quantity of said stop members (76;176) are determined depending on the weight of the annular combustor (56) and loads generated during operation.

14. The turbine engine (20) according to any of claims 9 to 13, wherein said at least one stop member (76;176) is uniformly circumferentially integrated around the vane support ring (80).

15. The turbine engine (20) according to any of claims 9 to 14, wherein said scallop cut (82;182) is configured such that said at least one stop member (76;176) can pass over the radially-outwardly extending flange (60a;160a) and then upon rotation of said at least one stop member (76;176) relative to said radially-outwardly extending flange (60a;160a), the at least one stop member (76;176) is configured in alignment to interfere with the radially-outwardly extending flange (60a;160a) responsive to a surge event.
